# EUROPEAN PATENT APPLICATION

(11) **EP 2 485 493 A2**
(43) Date of publication of application: **08.08.2012**
(21) Application number: 12000396.7
(22) Date of filing: 23.01.2012
(51) Int. Cl.: H04N 13/00

(54) **Method and system for error protection of 3D video**

(30) Priority: 03.02.2011 US 201113439130; 31.03.2011 US 201113077886
(71) Applicant: Broadcom Corporation, Irvine, CA 92617 (US)
(72) Inventor: Karaoguz, Jeyhan, 92606 Irvine, CA (US); Chen, Xuemin, 92067 Rancho Santa Fe, CA (US); Seshadri, Nambi, 92603 Irvine, CA (US); Boross, Chris, 94086 Sunnyvale, CA (US)
(74) Representative: Jehle, Volker Armin

(57) **Abstract**

A 3D video generation device may be operable to encode a plurality of regions of a captured 3D video frame. The plurality of regions may be associated with different depths. The encoding may apply varying error protection to the plurality of regions based on the associated different depths. The 3D video generation device may identify one or more regions of interest from the plurality of regions. Different levels of error protection may be applied to the region(s) of interest and to other region(s). The error protection may comprise a forward error correction (FEC). A higher level of the error protection may comprise an error-correcting code that is longer than an error-correcting code which is utilized for providing a lower level of the error protection.

## Description

### CROSS-REFERENCE TO RELATED APPLICATIONS/INCORPORATION BY REFERENCE

This patent application makes reference to, claims priority to, and claims benefit from:
United States Provisional Application Serial No. 61/377,867, which was filed on August 27,2010;and
United States Provisional Application Serial No. 61/439,130, which was filed on February 3, 2011.

This application also makes reference to:
United States Patent Application Serial No. 61/439,193 filed on February 3, 2011;
United States Patent Application Serial No. __________ (Attorney Docket No. 23461 US03) filed on March 31, 2011;
United States Patent Application Serial No. 61/439,274 filed on February 3, 2011;
United States Patent Application Serial No. __________ (Attorney Docket No. 23462US03) filed on March 31, 2011;
United States Patent Application Serial No. 61/439,283 filed on February 3, 2011;
United States Patent Application Serial No. __________ (Attorney Docket No. 23463US03) filed on March 31, 2011;
United States Patent Application Serial No. 61/439,130 filed on February 3, 2011;
United States Patent Application Serial No. __________ (Attorney Docket No. 23464US03) filed on March 31, 2011;
United States Patent Application Serial No. 61/439,290 filed on February 3, 2011;
United States Patent Application Serial No. __________ (Attorney Docket No. 23465US03) filed on March 31, 2011;
United States Patent Application Serial No. 61/439,119 filed on February 3, 2011;
United States Patent Application Serial No. __________ (Attorney Docket No. 23466US03) filed on March 31, 2011;
United States Patent Application Serial No. 61/439,297 filed on February 3, 2011;
United States Patent Application Serial No. __________ (Attorney Docket No. 23467US03) filed on March 31, 2011;
United States Patent Application Serial No. 61/439,201 filed on February 3, 2011;
United States Patent Application Serial No. 61/439,209 filed on February 3, 2011;
United States Patent Application Serial No. 61/439,113 filed on February 3, 2011;
United States Patent Application Serial No. __________ (Attorney Docket No. 23472US03) filed on March 31, 2011;
United States Patent Application Serial No. 61/439,103 filed on February 3, 2011;
United States Patent Application Serial No. __________ (Attorney Docket No. 23473US03) filed on March 31, 2011;
United States Patent Application Serial No. 61/439,083 filed on February 3, 2011;
United States Patent Application Serial No. __________ (Attorney Docket No. 23474US03) filed on March 31, 2011;
United States Patent Application Serial No. 61/439,301 filed on February 3, 2011; and United States Patent Application Serial No. __________ (Attorney Docket No. 23475US03) filed on March 31, 2011.

Each of the above stated applications is hereby incorporated herein by reference in its entirety.

### FIELD OF THE INVENTION

Certain embodiments of the invention relate to video processing. More specifically, certain embodiments of the invention relate to a method and system for error protection of 3D video.

### BACKGROUND OF THE INVENTION

Digital video capabilities may be incorporated into a wide range of devices such as, for example, digital televisions, digital direct broadcast systems, digital recording devices, and the like. Digital video devices may provide significant improvements over conventional analog video systems in processing and transmitting video sequences with increased bandwidth efficiency.

Video content may be recorded in two-dimensional (2D) format or in three-dimensional (3D) format. In various applications such as, for example, the DVD movies and the digital TV (DTV), a 3D video is often desirable because it is often more realistic to viewers than the 2D counterpart. A 3D video comprises a left view video and a right view video.

Various video encoding standards, for example, MPEG-1, MPEG-2, MPEG-4, MPEG-C part 3, H.263, H.264/MPEG-4 advanced video coding (AVC), multi-view video coding (MVC) and scalable video coding (SVC), have been established for encoding digital video sequences in a compressed manner. For example, the MVC standard, which is an extension of the H.264/MPEG-4 AVC standard, may provide efficient coding of a 3D video. The SVC standard, which is also an extension of the H.264/MPEG-4 AVC standard, may enable transmission and decoding of partial bitstreams to provide video services with lower temporal or spatial resolutions or reduced fidelity, while retaining a reconstruction quality that is similar to that achieved using the H.264/MPEG-4 AVC.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

A system and/or method for error protection of 3D video, substantially as shown in and/or described in connection with at least one of the figures, as set forth more completely in the claims.
According to an aspect of the invention, a method for processing video is provided, the method comprising:
in a three-dimensional (3D) video generation device:
   encoding a plurality of regions of a captured 3D video frame, wherein:
      said plurality of regions is associated with different depths; and
      said encoding applies varying error protection to said plurality of regions based on said associated different depths.
Advantageously, the method further comprises identifying one or more regions of interest from said plurality of regions of said captured 3D video frame.
Advantageously, a higher level of said error protection utilizes an error-correcting code that is longer than an error-correcting code which is utilized for providing a lower level of said error protection.
Advantageously, said 3D video generation device comprises a monoscopic 3D video generation device with one or more depth sensors, and said 3D video frame comprises a two-dimensional (2D) video frame and corresponding depth information.
Advantageously, one or more higher levels of said error protection are applied to one or more regions of interest within said 2D video frame and one or more lower levels of said error protection are applied to one or more other regions within said 2D video frame.
Advantageously, one or more higher levels of said error protection are applied to said corresponding depth information which is associated with one or more regions of interest within said 2D video frame and one or more lower levels of said error protection are applied to said corresponding depth information which is associated with one or more other regions within said 2D video frame.
Advantageously, a higher level of said error protection is applied to each of said plurality of regions within said 2D video frame and a lower level of said error protection is applied to said corresponding depth information which is associated with each of said plurality of regions within said 2D video frame.
Advantageously, a first type of said error protection is applied to one or more regions of interest within said captured 2D video frame and a second type of said error protection is applied to one or more other regions within said captured 2D video frame.
Advantageously, a first type of said error protection is applied to said corresponding depth information which is associated with one or more regions of interest within said captured 2D video frame and a second type of said error protection is applied to said corresponding depth information which is associated with one or more other regions within said captured 2D video frame.
Advantageously, the method further comprises transmitting said error protected 3D video frame to a 3D video rendering device for 3D video rendering and/or display.
According to an aspect, a system for processing video comprises:
one or more processors and/or circuits for use in a three-dimensional (3D) video generation device, said one or more processors and/or circuits being operable to:
   encoding a plurality of regions of a captured 3D video frame, wherein:
      said plurality of regions is associated with different depths; and
      said encoding applies varying error protection to said plurality of regions based on said associated different depths.
Advantageously, said one or more processors and/or circuits are operable to identify one or more regions of interest from said plurality of regions of said captured 3D video frame.
Advantageously, a higher level of said error protection utilizes an error-correcting code that is longer than an error-correcting code which is utilized for providing a lower level of said error protection.
Advantageously, said 3D video generation device comprises a monoscopic 3D video generation device with one or more depth sensors, and said 3D video frame comprises a two-dimensional (2D) video frame and corresponding depth information.
Advantageously, one or more higher levels of said error protection are applied to one or more regions of interest within said 2D video frame and one or more lower levels of said error protection are applied to one or more other regions within said 2D video frame.
Advantageously, one or more higher levels of said error protection are applied to said corresponding depth information which is associated with one or more regions of interest within said 2D video frame and one or more lower levels of said error protection are applied to said corresponding depth information which is associated with one or more other regions within said 2D video frame.
Advantageously, a higher level of said error protection is applied to each of said plurality of regions within said 2D video frame and a lower level of said error protection is applied to said corresponding depth information which is associated with each of said plurality of regions within said 2D video frame.
Advantageously, a first type of said error protection is applied to one or more regions of interest within said captured 2D video frame and a second type of said error protection is applied to one or more other regions within said captured 2D video frame.
Advantageously, a first type of said error protection is applied to said corresponding depth information which is associated with one or more regions of interest within said captured 2D video frame and a second type of said error protection is applied to said corresponding depth information which is associated with one or more other regions within said captured 2D video frame.
Advantageously, said one or more processors and/or circuits are operable to transmit said error protected 3D video frame to a 3D video rendering device for 3D video rendering and/or display.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a block diagram that illustrates an exemplary monoscopic 3D video camera embodying aspects of the present invention, compared with a conventional stereoscopic video camera.

FIG. 1B is a block diagram that illustrates exemplary processing of depth information and 2D color information to generate a 3D image, in accordance with an embodiment of the invention.

FIG. 2 is a block diagram illustrating an exemplary video communication system that is operable to provide error protection for 3D video, in accordance with an embodiment of the invention.

FIG. 3 is a block diagram illustrating an exemplary monoscopic 3D video camera that is operable to provide error protection for 3D video which are generated utilizing a single view and depth information, in accordance with an embodiment of the invention.

FIGs. 4A - 4D are block diagrams that each illustrates exemplary error protection for a 2D video frame and corresponding depth information, in accordance with an embodiment of the invention.

FIG. 5 is a flow chart illustrating exemplary steps for providing error protection for 3D video, in accordance with an embodiment of the invention.

### DETAILED DESCRIPTION OF THE INVENTION

Certain embodiments of the invention can be found in a method and system for error protection of 3D video. In various embodiments of the invention, a three-dimensional (3D) video generation device may be operable to encode or compress a plurality of regions of a captured 3D video frame. In this regard, the plurality of regions may be associated with different depths. The encoding may apply varying error protection to the plurality of regions based on the associated different depths. The error protection may comprise, for example, a forward error correction (FEC). A higher level of the error protection may utilize an error-correcting code that is longer than an error-correcting code which is utilized for providing a lower level of the error protection. In this regard, the longer error-correcting code may provide more robust error protection than a shorter error-correction code. The 3D video generation device may be operable to identify one or more regions of interest from the plurality of regions of the captured 3D video frame.

In an exemplary embodiment of the invention, the 3D video generation device may comprise, for example, a monoscopic 3D video generation device with one or more depth sensors. The 3D video frame may comprise a two-dimensional (2D) video frame and corresponding depth information. The corresponding depth information may be captured by the one or more depth sensors in the monoscopic 3D video generation device.

In an exemplary embodiment of the invention, one or more higher levels of the error protection may be applied to one or more regions of interest within the 2D video frame, and one or more lower levels of the error protection may be applied to one or more other regions within the 2D video frame, which are deemed to be of lesser interest. One or more higher levels of the error protection may be applied to the corresponding depth information which is associated with the one or more regions of interest within the 2D video frame, and one or more lower levels of the error protection may be applied to the corresponding depth information which is associated with one or more other regions within the 2D video frame, which are deemed to be of lesser interest. In other instances, a higher level of the error protection may be applied to each of the plurality of regions within the 2D video frame, and a lower level of the error protection may be applied to the corresponding depth information which is associated with each of the plurality of regions within the 2D video frame, for example.

In an exemplary embodiment of the invention, a first type of the error protection may be applied to one or more regions of interest within the captured 2D video frame, and a second type of the error protection may be applied to one or more other regions within the captured 2D video frame. A first type of the error protection may be applied to the corresponding depth information which is associated with one or more regions of interest within the captured 2D video frame, and a second type of the error protection may be applied to the corresponding depth information which is associated with one or more other regions within the captured 2D video frame.

In an exemplary embodiment of the invention, the 3D video generation device may be operable to transmit the error protected 3D video frame to a 3D video rendering device for 3D video rendering and/or display.

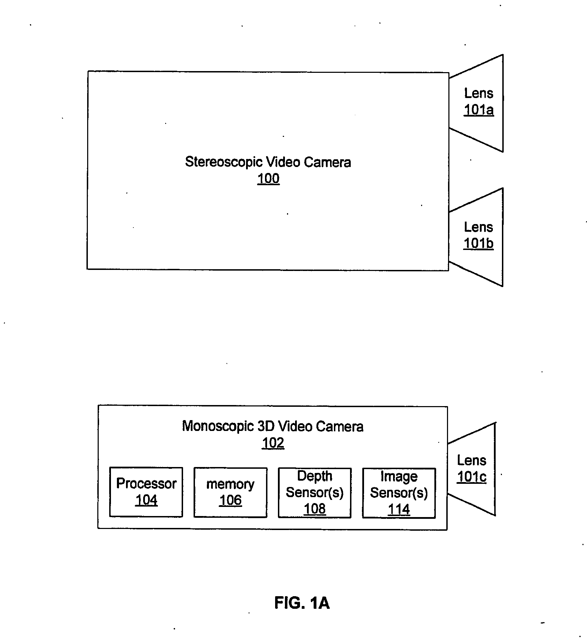

FIG. 1A is a block diagram that illustrates an exemplary monoscopic 3D video camera embodying aspects of the present invention, compared with a conventional stereoscopic video camera. Referring to FIG. 1A, there is shown a stereoscopic video camera 100 and a monoscopic 3D video camera 102. The stereoscopic video camera 100 may comprise two lenses 101 a and 101 b. Each of the lenses 101 a and 101b may capture images from a different viewpoint and images captured via the two lenses 101 a and 101 b may be combined to generate a 3D image. In this regard, electromagnetic (EM) waves in the visible spectrum may be focused on a first one or more image sensors by the lens 101a (and associated optics) and EM waves in the visible spectrum may be focused on a second one or more image sensors by the lens (and associated optics) 101 b.

The monoscopic 3D video camera 102 may comprise a processor 104, a memory 106, one or more depth sensors 108 and one or more image sensors 114. The monoscopic 3D or single-view video camera 102 may capture images via a single viewpoint corresponding to the lens 101c. In this regard, EM waves in the visible spectrum may be focused on one or more image sensors 114 by the lens 101 c. The monoscopic 3D video camera 102 may also capture depth information via the lens 101 c (and associated optics).

The processor 104 may comprise suitable logic, circuitry, interfaces, and/or code that may be operable to manage operation of various components of the monoscopic 3D video camera 102 and perform various computing and processing tasks.

The memory 106 may comprise, for example, DRAM, SRAM, flash memory, a hard drive or other magnetic storage, or any other suitable memory devices. For example, SRAM may be utilized to store data utilized and/or generated by the processor 104 and a hard-drive and/or flash memory may be utilized to store recorded image data and depth data.

The depth sensor(s) 108 may each comprise suitable logic, circuitry, interfaces, and/or code that may be operable to detect EM waves in the infrared spectrum and determine depth information based on reflected infrared waves. For example, depth information may be determined based on time-of-flight of infrared waves transmitted by an emitter (not shown) in the monoscopic 3D video camera 102 and reflected back to the depth sensor(s) 108. Depth information may also be determined using a structured light method, for example. In such instance, a pattern of light such as a grid of infrared waves may be projected at a known angle onto an object by a light source such as a projector. The depth sensor(s) 108 may detect the deformation of the light pattern such as the infrared light pattern on the object. Accordingly, depth information for a scene may be determined or calculated using, for example, a triangulation technique.

The image sensor(s) 114 may each comprise suitable logic, circuitry, interfaces, and/or code that may be operable to convert optical signals to electrical signals. Each image sensor 114 may comprise, for example, a charge coupled device (CCD) image sensor or a complimentary metal oxide semiconductor (CMOS) image sensor. Each image sensor 114 may capture brightness, luminance and/or chrominance information.

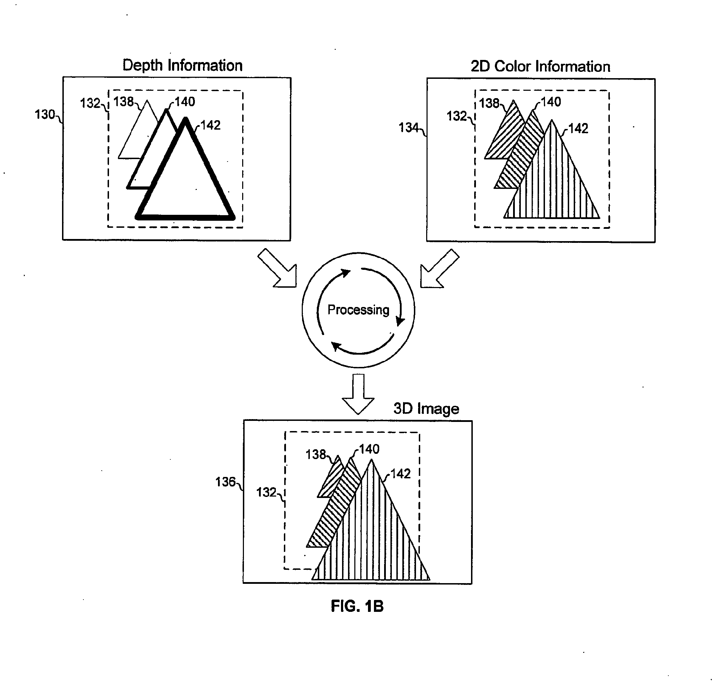

FIG. 1B is a block diagram that illustrates exemplary processing of depth information and 2D color information to generate a 3D image, in accordance with an embodiment of the invention. Referring to FIG. 1B, there is shown a frame of depth information 130, a frame of 2D color information 134 and a frame of 3D image 136. The frame of depth information 130 may be captured by the depth sensor(s) 108 and the frame of 2D color information 134 may be captured by the image sensor(s) 114. The frame of depth information 130 may be utilized while processing the frame of 2D color information 134 by the processor 104 to generate the frame of 3D image 136. The dashed line 132 may indicate a reference plane to illustrate the 3D image. In the frame of depth information 130, a line weight is used to indicate depth. In this regard, for example, the heavier the line, the closer that portion of the frame 130 is to a monoscopic 3D video camera 102. Therefore, the object 138 is farthest from the monoscopic 3D video camera 102, the object 142 is closest to the monoscopic 3D video camera, and the object 140 is at an intermediate depth. In various embodiments of the invention, the depth information may be mapped to a grayscale or pseudo-grayscale image by the processor 104.

The image in the frame 134 is a conventional 2D image. A viewer of the frame 134 perceives the same depth between the viewer and each of the objects 138, 140 and 142. That is, each of the objects 138, 140, 142 appears to reside on the reference plane 132. The image in the frame 136 is a 3D image. A viewer of the frame 136 perceives the object 138 being further from the viewer, the object 142 being closest to the viewer, and the object 140 being at an intermediate depth. In this regard, the object 138 appears to be behind the reference plane 132, the object 140 appears to be on the reference plane 132, and the object 142 appears to be in front of the reference plane 132.

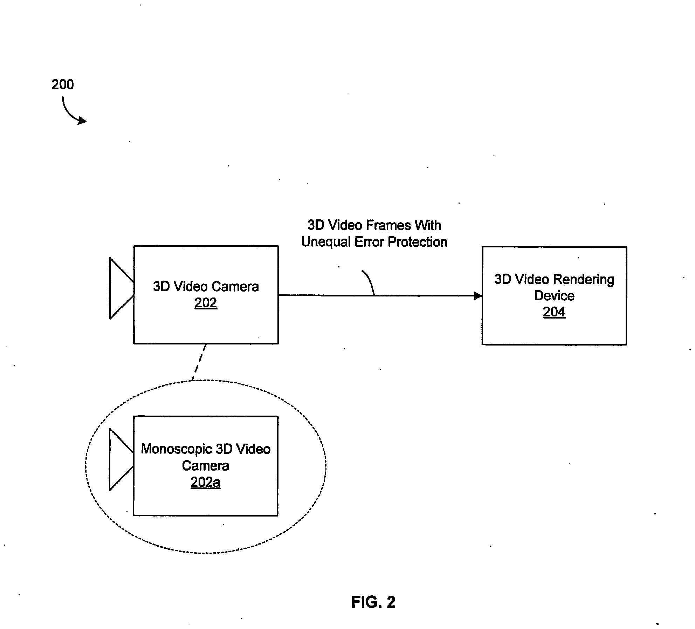

FIG. 2 is a block diagram illustrating an exemplary video communication system that is operable to provide error protection for 3D video, in accordance with an embodiment of the invention. Referring to FIG. 2, there is shown a video communication system 200. The video communication system 200 may comprise a 3D video camera 202 and a 3D video rendering device 204.

The 3D video camera 202 may comprise suitable logic, circuitry, interfaces and/or code that may be operable to capture 3D video frames. In an exemplary embodiment of the invention, the 3D video camera 202 may comprise a monoscopic 3D video camera 202a, for example. In this regard, the monoscopic 3D video camera 202a may be substantially similar to the monoscopic 3D video camera 102 in FIG. 1A. In an exemplary embodiment of the invention, the 3D video camera 202 may be operable to apply varying error protection to a plurality of regions of an encoded 3D video frame based on associated different depths for transmission to a 3D video rendering device such as the 3D video rendering device 204.

The 3D video rendering device 204 may comprise suitable logic, circuitry, interfaces and/or code that may be operable to receive, from the 3D video camera 202, an encoded or compressed video stream which may comprise the 3D Video frames with error protection. The 3D video rendering device 204, such as, for example, a set-top box (STB) and/or a digital TV (DTV) may process the received video stream for rendering and/or displaying in a 3D video format.

In operation, the 3D video camera 202 may be operable to capture a sequence of 3D video frames. A captured 3D video frame may be encoded or compressed by the 3D video camera 202. The encoding may apply varying error protection to a plurality of regions of the 3D video frame. The plurality of regions may be associated with different depths and the encoding may apply varying error protection to the plurality of regions based on the associated different depths.

The error protection may comprise, for example, a forward error correction (FEC). The error protection may be an unequal error protection where the 3D video camera 202 adds redundant data or error-correcting code to the 3D video bitstreams in a way that a region of interest or an important region may receive higher level of error protection than other parts. In such instances, for example, a higher level of error protection may comprise a longer error-correcting code that is longer than an error-correcting code for a lower level of error protection. The error-correcting codes may comprise, for example, Reed-Solomon (RS) code, low-density parity-check (LDPC) code, hamming code, turbo code, convolutional code and/or other types of error-correcting codes.

The 3D video camera 202 may identify one or more regions of interest from the plurality of regions of the captured 3D video frame. In this regard, a region of interest may be identified or selected based on the associated depth information and/or an area or an object that is a main focus of the video frame. For example, based on the depth information, a region with shortest depth and is closest to the 3D video camera 202 may be considered or selected as a region of interest. An area comprising a body, a car or a person running may also be considered as a region of interest, for example.

In an exemplary embodiment of the invention, the 3D video camera 202 may be operable to transmit the error protected 3D video frame to the 3D video rendering device 204 for 3D video rendering and/or display.

In an exemplary embodiment of the invention, the 3D video camera 202 may comprise, for example, a monoscopic 3D video camera 202a. In such instances, the captured 3D video frame may comprise a 2D video frame and corresponding depth information.

In an exemplary embodiment of the invention, varying levels of a same error protection type may be applied to the plurality of regions of the captured 2D video frame and/or to the corresponding depth information for the plurality of regions. In this regard, for example, one or more higher levels of the error protection may be applied to one or more regions of interest within the 2D video frame, and one or more lower levels of the error protection may be applied to one or more other regions within the 2D video frame. One or more higher levels of the error protection may be applied to the corresponding depth information which is associated with the one or more regions of interest within the 2D video frame, and one or more lower levels of the error protection may be applied to the corresponding depth information which is associated with one or more other regions within the 2D video frame. In other instances, a higher level of the error protection may be applied to each of the plurality of regions within the 2D video frame, and a lower level of the error protection may be applied to the corresponding depth information which is associated with each of the plurality of regions within the 2D video frame, for example.

In another exemplary embodiment of the invention, varying types of error protection may be applied to the plurality of regions of the captured 2D video frame and/or to the corresponding depth information for the plurality of regions. In this regard, for example, a first type of the error protection may be applied to one or more regions of interest within the captured 2D video frame, and a second type of the error protection may be applied to one or more other regions within the captured 2D video frame. A first type of the error protection may be applied to the corresponding depth information which is associated with one or more regions of interest within the captured 2D video frame, and a second type of the error protection may be applied to the corresponding depth information which is associated with one or more other regions within the captured 2D video frame.

Although a 3D video camera 202 such as the monoscopic 3D video camera 202a is illustrated in FIG. 2, the invention may not be so limited. Accordingly, any type of 3D video generation device which generates 3D video frames with associated depths may be illustrated without departing from the spirit and scope of various embodiments of the invention. For example, a 3D video generation device such as a monoscopic 3D camcorder, which generates 3D video content in 2D-plus-depth formats, may be illustrated. A stereoscopic video camera such as the stereoscopic video camera 100 may also be illustrated, for example.

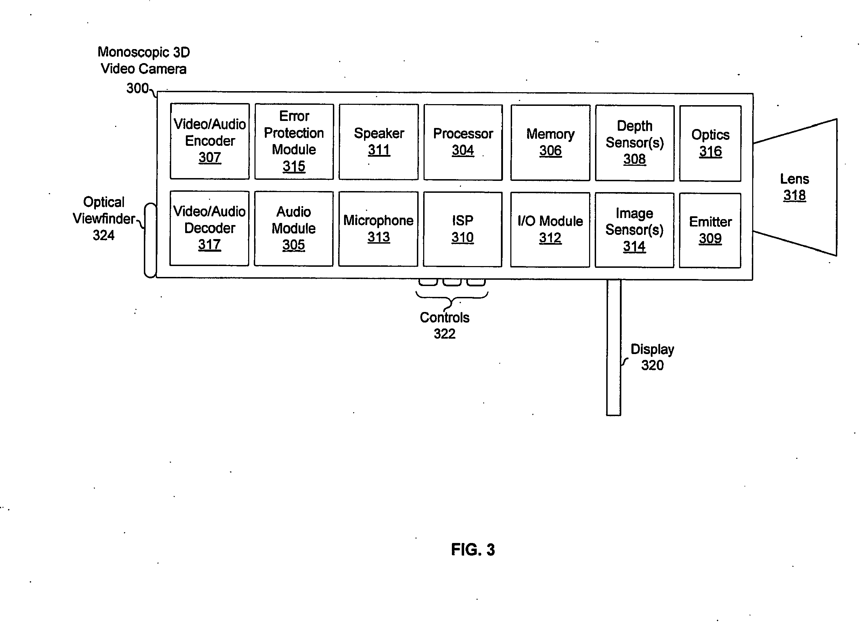

FIG. 3 is a block diagram illustrating an exemplary monoscopic 3D video camera that is operable to provide error protection for 3D video which are generated utilizing a single view and depth information, in accordance with an embodiment of the invention. Referring to FIG. 3, there is shown a monoscopic 3D video camera 300. The monoscopic 3D video camera 300 may comprise a processor 304, a memory 306, one or more depth sensors 308, an emitter 309, an image signal processor (ISP) 310, an input/output (I/O) module 312, one or more image sensors 314, an optics 316, a speaker 311, a microphone 313, a video/audio encoder 307, a video/audio decoder 317, an audio module 305, an error protection module 315, a lens 318, a plurality of controls 322, an optical viewfinder 324 and a display 320. The monoscopic 3D video camera 300 may be substantially similar to the monoscopic 3D video camera 102 in FIG. 1A.

The processor 304 may comprise suitable logic, circuitry, interfaces, and/or code that may be operable to coordinate operation of various components of the monoscopic 3D video camera 300. The processor 304 may, for example, run an operating system of the monoscopic 3D video camera 300 and control communication of information and signals between components of the monoscopic 3D video camera 300. The processor 304 may execute code stored in the memory 306. In an exemplary embodiment of the invention, the processor 304 may identify or select one or more regions of interest within a 2D video frame. The identification or selection may be based on, for example, the captured corresponding depth data and/or an area or an object of primary focus within the video frame.

The memory 306 may comprise, for example, DRAM, SRAM, flash memory, a hard drive or other magnetic storage, or any other suitable memory devices. For example, SRAM may be utilized to store data utilized and/or generated by the processor 304 and a hard-drive and/or flash memory may be utilized to store recorded image data and depth data.

The depth sensor(s) 308 may each comprise suitable logic, circuitry, interfaces, and/or code that may be operable to detect EM waves in the infrared spectrum and determine depth information based on reflected infrared waves. For example, depth information may be determined based on time-of-flight of infrared waves transmitted by the emitter 309 and reflected back to the depth sensor(s) 308. Depth information may also be determined using a structured light method, for example. In such instance, a pattern of light such as a grid of infrared waves may be projected at a known angle onto an object by a light source such as a projector. The depth sensor(s) 308 may detect the deformation of the light pattern such as the infrared light pattern on the object. Accordingly, depth information for a scene may be determined or calculated using, for example, a triangulation technique.

The image signal processor or image sensor processor (ISP) 310 may comprise suitable logic, circuitry, interfaces, and/or code that may be operable to perform complex processing of captured image data and captured corresponding depth data. The ISP 310 may perform a plurality of processing techniques comprising, for example, filtering, demosaic, Bayer interpolation, lens shading correction, defective pixel correction, white balance, image compensation, color transformation and/or post filtering.

The audio module 305 may comprise suitable logic, circuitry, interfaces and/or code that may be operable to perform various audio functions of the monoscopic 3D video camera 300. In an exemplary embodiment of the invention, the audio module 305 may perform noise cancellation and/or audio volume level adjustment for a 3D scene.

The video/audio encoder 307 may comprise suitable logic, circuitry, interfaces and/or code that may be operable to perform video encoding and/or audio encoding functions. For example, the video/audio encoder 307 may encode or compress captured 2D video frames and corresponding depth information and/or audio data for transmission to a 3D video rendering device such as the 3D video rendering device 204.

The video/audio decoder 317 may comprise suitable logic, circuitry, interfaces and/or code that may be operable to perform video decoding and/or audio decoding functions.

The error protection module 315 may comprise suitable logic, circuitry, interfaces and/or code that may be operable to perform error protection functions for the monoscopic 3D video camera 300. For example, the error protection module 315 may provide error protection to encoded 2D video frames and corresponding depth information and/or encoded audio data for transmission to a 3D video rendering device such as the 3D video rendering device 204. In an exemplary embodiment of the invention, the error protection module 315 may apply varying error protection to a plurality of regions of a captured 2D video frame and/or to corresponding depth information or data for the plurality of regions.

The input/output (I/O) module 312 may comprise suitable logic, circuitry, interfaces, and/or code that may enable the monoscopic 3D video camera 300 to interface with other devices in accordance with one or more standards such as USB, PCI-X, IEEE 1394, HDMI, DisplayPort, and/or analog audio and/or analog video standards. For example, the I/O module 312 may be operable to send and receive signals from the controls 322, output video to the display 320, output audio to the speaker 311, handle audio input from the microphone 313, read from and write to cassettes, flash cards, solid state drives, hard disk drives or other external memory attached to the monoscopic 3D video camera 300, and/or output audio and/or video externally via one or more ports such as a IEEE 1394 port, a HDMI and/or an USB port for transmission and/or rendering.

The image sensor(s) 314 may each comprise suitable logic, circuitry, interfaces, and/or code that may be operable to convert optical signals to electrical signals. Each image sensor 314 may comprise, for example, a charge coupled device (CCD) image sensor or a complimentary metal oxide semiconductor (CMOS) image sensor. Each image sensor 314 may capture brightness, luminance and/or chrominance information.

The optics 316 may comprise various optical devices for conditioning and directing EM waves received via the lens 318. The optics 316 may direct EM waves in the visible spectrum to the image sensor(s) 314 and direct EM waves in the infrared spectrum to the depth sensor(s) 308. The optics 316 may comprise, for example, one or more lenses, prisms, luminance and/or color filters, and/or mirrors.

The lens 318 may be operable to collect and sufficiently focus electromagnetic (EM) waves in the visible and infrared spectra.

The display 320 may comprise a LCD display, a LED display, an organic LED (OLED) display and/or other digital display on which images recorded via the monoscopic 3D video camera 300 may be displayed. In an embodiment of the invention, the display 320 may be operable to display 3D images.

The controls 322 may comprise suitable logic, circuitry, interfaces, and/or code that may enable a user to interact with the monoscopic 3D video camera 300. For example, the controls 322 may enable the user to control recording and playback. In an embodiment of the invention, the controls 322 may enable the user to select whether the monoscopic 3D video camera 300 records in 2D mode or 3D mode.

The optical viewfinder 324 may enable a user to view or see what the lens 318 "sees," that is, what is "in frame".

In operation, the image sensor(s) 314 may capture brightness, luminance and/or chrominance information associated with a 2D video frame and the depth sensor(s) 308 may capture corresponding depth information. In various embodiments of the invention, various color formats, such as RGB and YCrCb, may be utilized. The depth information may be stored in the memory 306 as metadata or as an additional layer of information, which may be utilized when rendering a 3D video frame from the 2D video frame information.

In an exemplary embodiment of the invention, the processor 304 may be operable to identify one or more regions of interest within the captured 2D video frame. A region of interest may be identified or selected based on, for example, the captured corresponding depth information and/or an area or an object of primary focus within the video frame. The captured 2D video frame and the captured corresponding depth information may be encoded or compressed by the video/audio encoder 307. The encoding may apply varying error protection to a plurality of regions of the 2D video frame and/or to the corresponding depth information for the plurality of regions, utilizing the error protection module 315. In this regard, for example, the error protection module 315 may apply one or more higher levels of the error protection to one or more regions of interest within the 2D video frame. One or more lower levels of the error protection may be applied to one or more other regions within the 2D video frame, which are deemed to be of lesser interest. The error protection module 315 may apply one or more higher levels of the error protection to the corresponding depth information which is associated with one or more regions of interest within the 2D video frame. One or more lower levels of the error protection may be applied to the corresponding depth information which is associated with one or more other regions within the 2D video frame, which are deemed to be of lesser interest. In other instances, the error protection module 315 may apply a higher level of the error protection to each region within the 2D video frame, and apply a lower level of the error protection to the corresponding depth information which is associated with each region within the 2D video frame, for example.

Varying types of error protection may be applied to different regions of the captured 2D video frame and/or to the corresponding depth information for the different regions. For example, for an area with high details in a region of interest, a first type of error-correcting code may be used while an area with little change or less detail, a second type or error-correcting code may be used. In this regard, the error protection module 315 may apply a first type of the error protection to one or more regions of interest within the captured 2D video frame. A second type of the error protection may be applied to one or more other regions within the captured 2D video frame. The error protection module 315 may apply a first type of the error protection to the corresponding depth information which is associated with one or more regions of interest within the captured 2D video frame. A second type of the error protection may be applied to the corresponding depth information which is associated with one or more other regions within the captured 2D video frame.

In an exemplary embodiment of the invention, the I/O module 312 may be operable to transmit or output the error protected 2D video frame and the error protected corresponding depth information to the 3D video rendering device 204 for 3D video rendering and/or display.

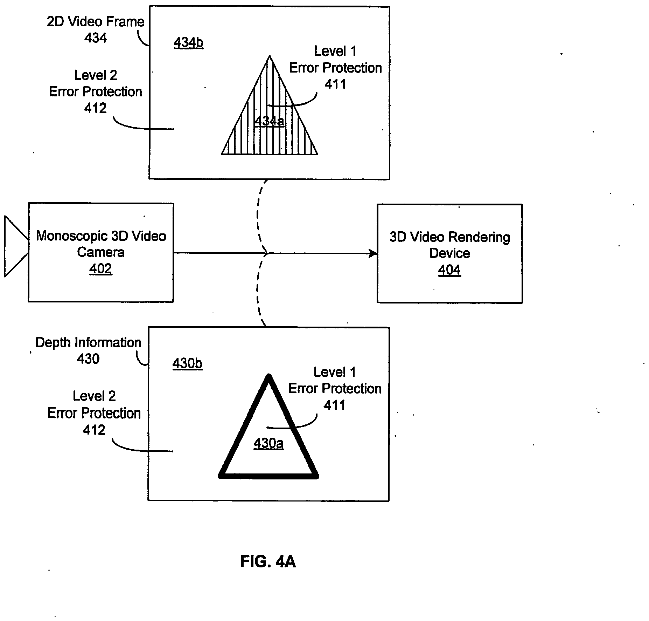

FIGs. 4A - 4D are block diagrams that each illustrates exemplary error protection for a 2D video frame and corresponding depth information, in accordance with an embodiment of the invention. These scenarios are provided by way of exemplary illustration and not of limitation. Referring to each of FIGs. 4A - 4D, there is shown a monoscopic 3D video camera 402, a 3D video rendering device 404. There is also shown a 2D video frame 434 and a corresponding depth information frame 430. The monoscopic 3D video camera 402 may be substantially similar to the monoscopic 3D video camera 202 in FIG. 2. The 3D video rendering device 404 may be substantially similar to the 3D video rendering device 204 in FIG. 2. The 2D video frame 434 may comprise an identified region of interest 434a and other region 434b. The depth information frame 430 may comprise a region 430a which corresponds to the region of interest 434a within the 2D video frame 434. The region 430b within the depth information frame 430 corresponds to the other region 434b within the 2D video frame 434.

FIG. 4A illustrates a first scenario in which the monoscopic 3D video camera 402 may be operable to apply level 1 error protection 411 to the regions 434a, 430a while apply level 2 error protection 412 to the regions 434b, 430b for transmission of the 2D video frame 434 and the corresponding depth information frame 430 to the 3D video rendering device 404. In this scenario, the level 1 error protection 411 may be a higher level of error protection and the level 2 error protection 412 may be a lower level of error protection. In this regard, the level 1 error protection 411 may utilize a longer error-correcting code that is longer than an error-correcting code utilized by the level 1 error protection 412, for example.

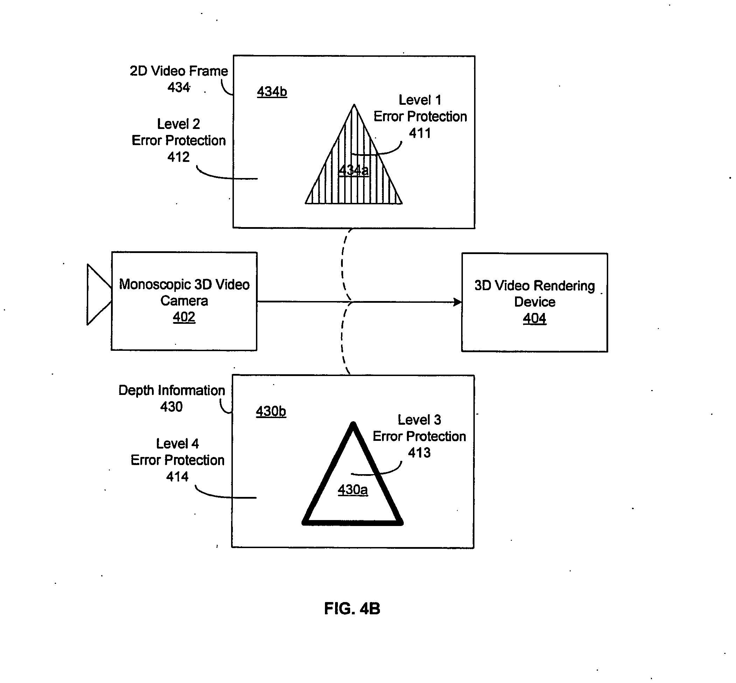

FIG. 4B illustrates a second scenario in which the monoscopic 3D video camera 402 may be operable to apply level 1 error protection 411 to the region 434a, level 2 error protection 412 to the region 434b, level 3 error protection 413 to the region 430a and level 4 error protection 414 to the region 430b for transmission of the 2D video frame 434 and the corresponding depth information frame 430 to the 3D video rendering device 404. In this scenario, level 1 error protection 411 may be the highest level of error protection while the level 4 error protection 414 may be the lowest level of error protection or may be with no error protection at all, for example. The level 2 error protection 412 may be a level of error protection which is lower than the level 1 error protection 411. The level 3 error protection 413 may be a level of error protection which is lower than the level 2 error protection 412, for example.

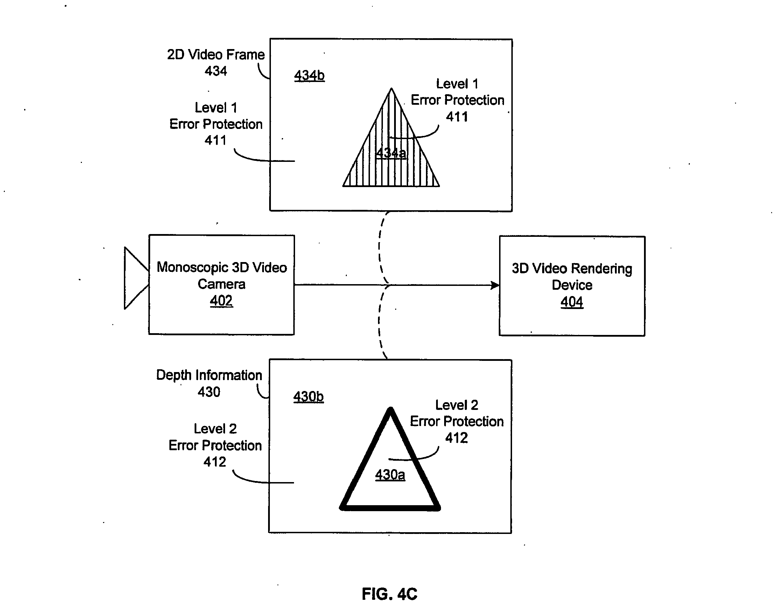

FIG. 4C illustrates a third scenario in which the monoscopic 3D video camera 402 may be operable to apply level 1 error protection 411 to the regions 434a, 434b while apply level 2 error protection 412 to the regions 430a, 430b for transmission of the 2D video frame 434 and the corresponding depth information frame 430 to the 3D video rendering device 404. In this scenario, the level 1 error protection 411 may be a higher level of error protection and the level 2 error protection 412 may be a lower level error protection. In this regard, for example, the 2D video frame 434 and the corresponding depth information frame 430 may be transmitted separately via two different or layered bitstreams to the 3D video rendering device 404. The 2D video frame 434 may be protected with the level 1 error protection 411 which is a higher level of error protection while the corresponding depth information frame 430 may be protected with the level 2 error protection 412 which is a lower level of error protection.

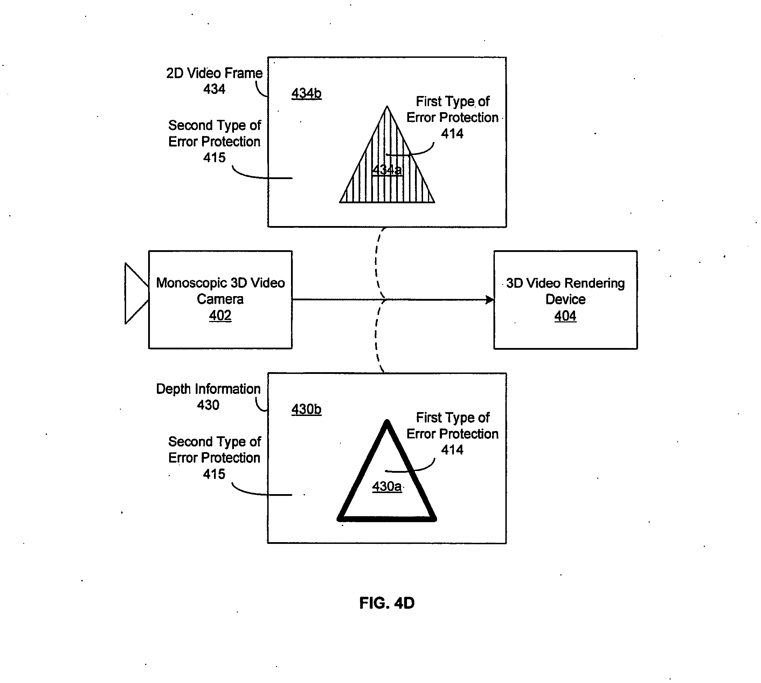

FIG. 4D illustrates a fourth scenario in which the monoscopic 3D video camera 402 may be operable to apply a first type of error protection 414 to the regions 434a, 430a while apply a second type of error protection 415 to the regions 434b, 430b for transmission of the 2D video frame 434 and the corresponding depth information frame 430 to the 3D video rendering device 404. In this scenario, for example, the first type of error protection 414 may utilize a Reed-Solomon (RS) code while the second type of error protection 415 may utilize other type of error-correcting code.

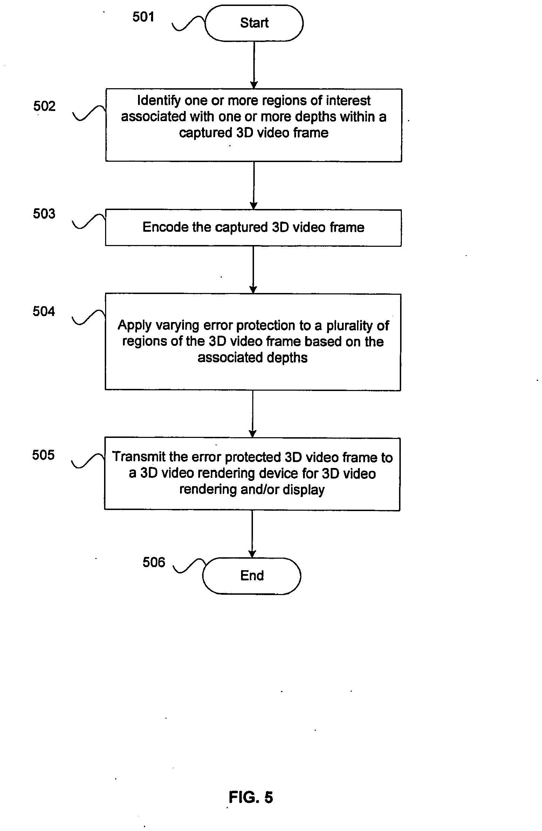

FIG. 5 is a flow chart illustrating exemplary steps for providing error protection for 3D video, in accordance with an embodiment of the invention. Referring to FIG. 5, the exemplary steps start at step 501. In step 502, the 3D video camera 202 may be operable to identify one or more regions of interest associated with one or more depths within a captured 3D video frame. The identification may be based on, for example, the associated depth information and/or an area or an object of primary focus within the video frame.

In step 503, the captured 3D video frame may be encoded or compressed by the 3D video camera 202. In step 504, during the encoding, the 3D video camera 202 may apply varying error protection to a plurality of regions of the 3D video frame based on, for example, the associated depths. For example, the 3D video camera 202 may apply one or more higher levels of the error protection to the one or more regions of interest within the 3D video frame, and apply one or more lower levels of the error protection to one or more other regions within the 3D video frame. In other instances, for example, the 3D video camera 202 may apply a first type of the error protection to the one or more regions of interest within the captured 3D video frame, and apply a second type of the error protection to one or more other regions within the captured 3D video frame.

In step 505, the error protected 3D video frame may be transmitted or outputted by the 3D video camera 202 to a 3D video rendering device such as the 3D video rendering device 204 for 3D video rendering and/or display. The exemplary steps may proceed to the end step 506.

In various embodiments of the invention, a 3D video generation device such as the 3D video camera 202 may be operable to encode or compressed a plurality of regions of a captured 3D video frame. In this regard, the plurality of regions may be associated with different depths. The encoding may apply varying error protection to the plurality of regions based on the associated different depths. The error protection may comprise, for example, a forward error correction (FEC). A higher level of the error protection may utilize an error-correcting code that is longer than an error-correcting code which is utilized for providing a lower level of the error protection. In this regard, the longer error-correcting code may provide more robust error protection than a shorter error-correcting code. The 3D video camera 202 may be operable to identify one or more regions of interest from the plurality of regions of the captured 3D video frame. In this regard, the region of interest may be identified or selected based on, for example, the associated depth information and/or an area or an object of primary focus.

In an exemplary embodiment of the invention, the 3D video camera 202 may be operable to transmit the error protected 3D video frame to a 3D video rendering device such as the 3D video rendering device 204 for 3D video rendering and/or display.

In an exemplary embodiment of the invention, the 3D video camera 202 may comprise, for example, a monoscopic 3D video camera such as the monoscopic 3D video camera 300 with one or more depth sensors 308. In this regard, the captured 3D video frame may comprise a 2D video frame 434 and corresponding depth information 430. The corresponding depth information 430 may be captured by the one or more depth sensors 308 in the monoscopic 3D video camera 300.

In an exemplary embodiment of the invention, an error protection module 315 in the monoscopic video camera 300 may be operable to apply one or more higher levels of the error protection to one or more regions of interest such as the region 434a within the 2D video frame 434, and apply one or more lower levels of the error protection to one or more other regions such as the region 434b within the 2D video frame 434. The error protection module 315 may be operable to apply one or more higher levels of the error protection to one or more regions of interest such as the region 430a within the corresponding depth information 430 and apply one or more lower levels of the error protection to one or more other regions such as the region 430b within the corresponding depth information 430. In other instances, the error protection module 315 may be operable to apply a higher level of the error protection to each region within the 2D video frame 434, and apply a lower level of the error protection to each region within the corresponding depth information 430, for example.

In an exemplary embodiment of the invention, the error protection module 315 may be operable to apply a first type of the error protection to one or more regions of interest such as the region 434a within the 2D video frame 434, and apply a second type of the error protection to one or more other regions such as the region 434b within the 2D video frame 434. The error protection module 315 may be operable to apply a first type of the error protection to one or more regions of interest such as the region 430a within the corresponding depth information 430 and apply a second type of the error protection to one or more other regions such as the region 430b within the corresponding depth information 430.

Other embodiments of the invention may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the steps as described herein for error protection of 3D video.

Accordingly, the present invention may be realized in hardware, software, or a combination of hardware and software. The present invention may be realized in a centralized fashion in at least one computer system or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for processing video, the method comprising:
in a three-dimensional (3D) video generation device:
encoding a plurality of regions of a captured 3D video frame, wherein:
said plurality of regions is associated with different depths; and
said encoding applies varying error protection to said plurality of regions based on said associated different depths.

2. The method according to claim 1, comprising identifying one or more regions of interest from said plurality of regions of said captured 3D video frame.

3. The method according to claim 1, wherein a higher level of said error protection utilizes an error-correcting code that is longer than an error-correcting code which is utilized for providing a lower level of said error protection.

4. The method according to claim 1, wherein said 3D video generation device comprises a monoscopic 3D video generation device with one or more depth sensors, and said 3D video frame comprises a two-dimensional (2D) video frame and corresponding depth information.

5. The method according to claim 4, wherein one or more higher levels of said error protection are applied to one or more regions of interest within said 2D video frame and one or more lower levels of said error protection are applied to one or more other regions within said 2D video frame.

6. The method according to claim 4, wherein one or more higher levels of said error protection are applied to said corresponding depth information which is associated with one or more regions of interest within said 2D video frame and one or more lower levels of said error protection are applied to said corresponding depth information which is associated with one or more other regions within said 2D video frame.

7. The method according to claim 4, wherein a higher level of said error protection is applied to each of said plurality of regions within said 2D video frame and a lower level of said error protection is applied to said corresponding depth information which is associated with each of said plurality of regions within said 2D video frame.

8. The method according to claim 4, wherein a first type of said error protection is applied to one or more regions of interest within said captured 2D video frame and a second type of said error protection is applied to one or more other regions within said captured 2D video frame.

9. The method according to claim 4, wherein a first type of said error protection is applied to said corresponding depth information which is associated with one or more regions of interest within said captured 2D video frame and a second type of said error protection is applied to said corresponding depth information which is associated with one or more other regions within said captured 2D video frame.

10. The method according to claim 1, comprising transmitting said error protected 3D video frame to a 3D video rendering device for 3D video rendering and/or display.

11. A system for processing video, the system comprising:
one or more processors and/or circuits for use in a three-dimensional (3D) video generation device, said one or more processors and/or circuits being operable to:
encoding a plurality of regions of a captured 3D video frame, wherein:
said plurality of regions is associated with different depths; and
said encoding applies varying error protection to said plurality of regions based on said associated different depths.

12. The system according to claim 11, wherein said one or more processors and/or circuits are operable to identify one or more regions of interest from said plurality of regions of said captured 3D video frame.

13. The system according to claim 11, wherein a higher level of said error protection utilizes an error-correcting code that is longer than an error-correcting code which is utilized for providing a lower level of said error protection.

14. The system according to claim 11, wherein said 3D video generation device comprises a monoscopic 3D video generation device with one or more depth sensors, and said 3D video frame comprises a two-dimensional (2D) video frame and corresponding depth information.

15. The system according to claim 14, wherein one or more higher levels of said error protection are applied to one or more regions of interest within said 2D video frame and one or more lower levels of said error protection are applied to one or more other regions within said 2D video frame.
